# EUROPEAN PATENT APPLICATION

(11) **EP 1 959 680 A2**
(43) Date of publication of application: **20.08.2008**
(21) Application number: 07122139.4
(22) Date of filing: 03.12.2007
(51) Int. Cl.: H04N 5/445

(54) **Method, apparatus and system for implementing service management**

(30) Priority: 15.02.2007 CN 200710084871
(71) Applicant: Huawei Technologies Co., Ltd., Longgang District, Shenzhen Guangdong 518129 (CN)
(72) Inventor: Jiang, Yong HUAWEI TECHNOLOGIES CO., LTD., Shenzhen 518129 Guangdong (CN); Zhu, Xiaoming HUAWEI TECHNOLOGIES CO., LTD., Shenzhen 518129 Guangdong (CN)
(74) Representative: Körber, Martin Hans

(57) **Abstract**

A method for managing a service includes: receiving a request from a user; obtaining a service management strategy taking the features of the user as manage conditions and determining the manage measure for a service according to the features of the user requesting the service and the service management strategy. A system for managing a service which includes a UE and a network-side device is also provided,. An apparatus for managing a service is further provided. With the present invention, a service may be carried out according to the features of a user.

## Description

### Field of the Invention

The present invention relates to communication service technologies, and particularly, to a method, an apparatus and a system for implementing service management.

### Background of the Invention

With the advancement of the society and the continuous improvement of the quality of people's life, demands on audiovisual entertainment are not limited to conventional audiovisual broadcasting services any longer, and personalized interactive service and entertainment experience have become more and more popular. Therefore, the types of services are enriched.

Along with the enrichment of the types of the services, several requirements are put forward on a method for implementing service management.

In a first aspect, it is required that a service may be carried out according to the service management, based on the cost of the service. The cost includes the cost of hardware devices, the cost of maintaining an operation, and the cost of copyright, etc. From an operator's point of view, attention is attached to the benefit-cost ratio. Therefore, the number and scope of users who use a service with a higher operation or construction cost should be controlled. For example, because the construction cost of the video on demand service is relatively high, the video on demand service should merely be carried out in certain users with high income to reduce the investment.

In a second aspect, it is required that whether a user has basic qualifications for carrying out a service based on the actual situation of the user may be automatically determined according to the service management, so that the service may merely be carried out in the group of users fulfilling the basic qualifications. For example, different interactive services have different requirements on terminals and networks in the digital television field at present. Various problems occur if a service is carried out on a terminal or network dissatisfying the basic qualifications for operating the service. Moreover, it is a gradual process for the operator to construct a network and update a terminal. The period of the process is much longer than the period of launching a service. Therefore, multiple networks or terminals with different functions coexist in a long period of time. Therefore, the service management should determine whether a user satisfies the basic qualifications for operating the service according to the type of the network of user and the model of the terminal. If the user satisfies the basic qualifications, the service may be provided to the user; otherwise, the service is screened.

In a third aspect, it is required that the group of users may be subdivided, the resources of users may be deeply dug from an operator's point of view, personalized combination and classification of service information may be provided to users and diversified service and interactive service experience may be provided to the users based on the features of the user according to the service management. For example, the operator hopes that a list which displays programs according to the types of the programs is adjusted on the basis of the personal favorite of the user. The service contents, in which the user is interested, are placed at a convenient position to make it convenient for the user to select the service.

In a fourth aspect, it is required that the service information of the service may be filtered according to the service management. Because the service information provided by various services is varying and a piece of service information may be provided for a special group of users and screened from the users who are not in the group. Therefore, the service management is required to filter the service information of the service on the basis of certain features of users. For example, for a user who receives distance education, it is managed that the user may merely receive the service related to the current lesson during the teaching.

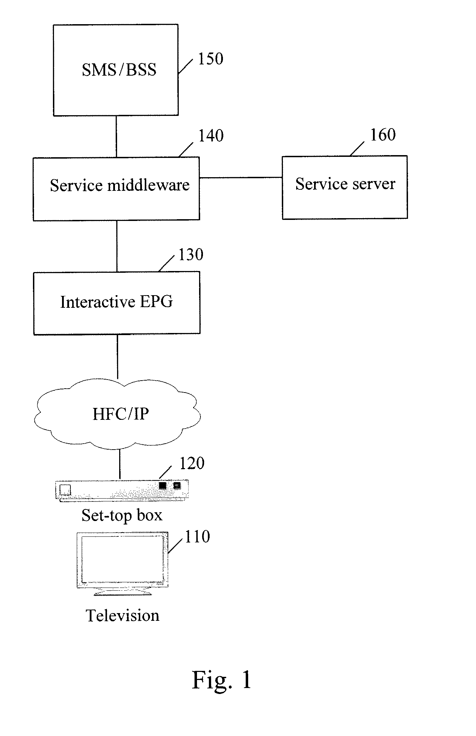

At present, as for the service management of interactive services provided in the fields of digital television and Internet Protocol Television (IPTV), an extensive service management is adopted. Figure 1 shows a schematic diagram illustrating a conventional system for implementing service management. The system includes a Subscriber Management System (SMS) or Billing Supporting System (BSS) 150, a service middleware 140, an interactive Electronic Program Guide (EPG) 130, a service server 160, a set-top box 120 and a television 110.

The set-top box 120 and the television 110 are terminal devices of a user and used for sending a service request to the interactive EPG 130.

The interactive EPG 130 is configured to display an interactive service menu based on the received service request, and further send the received service request to the service middleware 140.

The service middleware 140 is configured to perform service management and service configuration based on the service request sent from the interactive EPG 130, and request a service of the service server 160.

The SMS or BSS 150 is configured to perform service operation management.

The service server 160 is configured to provide the service to the set-top box 120 and the television 110 via the service middleware 140 and the interactive EPG 130.

A typical process of a service is hereinafter described by taking the structure of the system shown in Figure 1 as an example. The process of the service may be divided into a service navigation process, a service request and serving process, and a service terminating process. Among the above processes, Blocks 201-202 are the service navigation process, Blocks 203-207 are the service request and service providing process, and Block 208 is the service terminating process.

Block 201: A user requests a homepage from the interactive EPG via a television and a set-top box.

Block 202: The interactive EPG displays an interactive service menu to the user via the television and the set-top box.

With a conventional method for implementing service management, service information may be classified and graded, and may be displayed in types and piloted on the interactive EPG The service management of the method is system level management, i.e. the interactive EPG displays the same interactive service menu to all users. All users may pick up the serving navigation of a service if the system may provide the service; otherwise, all the users may not pick up the serving navigation of the service.

Block 203: The user selects a service.

The user selects the needed service by performing an interactive operation under the guide of the interactive EPG

Block 204: The set-top box sends a service request to a service middleware via an interactive EPG

Block 205: The service middleware authenticates the user for the service.

With a conventional method for implementing service management, watching levels are used to implement secrecy manage of the service access when the service middleware authenticates the user for the service. In the case that the watching level of a user requesting for the service is lower than the management level of the service, the user is asked to input a management password. The user may use the service merely when the management password is correct. If the user passes the authentication of the service, the service middleware creates a session for the service request, which includes applying for and allocating physical and logical resources.

Block 206: The service middleware sends a service resource request to a service server.

Block 207: The service server provides the service to the user.

Block 208 is performed if the service ends or the user terminates the service ahead.

Block 208: The service middleware closes the session.

When the service ends or the user terminates the service ahead, the service middleware closes the session, releases the resources and terminates the service.

As can be seen from the above process of the service, the conventional method for implementing service management manages a service on system level. The same classification and grading of the service information of a service are provided to all users. Therefore, risks in supervision are brought forward because of the lack of filtering and screening the service information of the service based on the features of users. In addition, because the conventional method for implementing service management manages a service on system level, the service is not subdivided according to the features of each user. As a result, the service may not accurately cover the user with a higher benefit-cost ratio, and thus, the operation cost of the service is increased.

To sum up, it is obtained in the process of the invention that with the current method for implementing service management, a service may not be carried out according to the features of a user and the new demand put forward by various services may not be met well.

### Summary

In view of the above, in one aspect, embodiments of the present invention provide a method, an apparatus and a system for managing a service, in which a service may be carried out according to the features of a user.

A method for managing a service which is suitable for the field of digital television, internet television or mobile television includes:
receiving a request from a user;
obtaining a service management strategy taking the features of the user as manage conditions; and
determining manage measure for a service according to the features of the user and the service management strategy.

An apparatus for managing a service which is suitable for the field of digital television, internet television or mobile television includes:
a receiving unit, configured to receive a request from a user; and
a managing unit, configured to obtain a service management strategy taking the features of the user as manage conditions, and determine the manage measure for a service according to the features of the user and the service management strategy.

A system for managing a service which is suitable for the field of digital television, internet television or mobile television includes:
a user terminal, UE, configured to send a request; and
a network-side device, configured to receive the request sent from the UE and obtain a service management strategy taking the features of the user as manage conditions; and determine the manage measure for a service according to the features of the user requesting the service and the service management strategy.

To sum up, embodiments of the present invention provide a method, a system, an interactive EPG and a service middleware for implementing service management. Diverse choices may be provided for users by applying various feature combinations of users in the service management. Therefore, the demand of an operator on fine operation and deep digging of resources may be satisfied according to the experience of users and diversified services provided for users.

Therefore, the method, system, interactive EPG and service middleware for implementing service management provided by embodiments of the present invention may determine different management measures for a service requested by users with different features and carry out the service for the users with different features according to a service management strategy set in advance.

### Brief Description of the Drawings

Figure 1 shows a schematic diagram illustrating a conventional system for implementing service management.

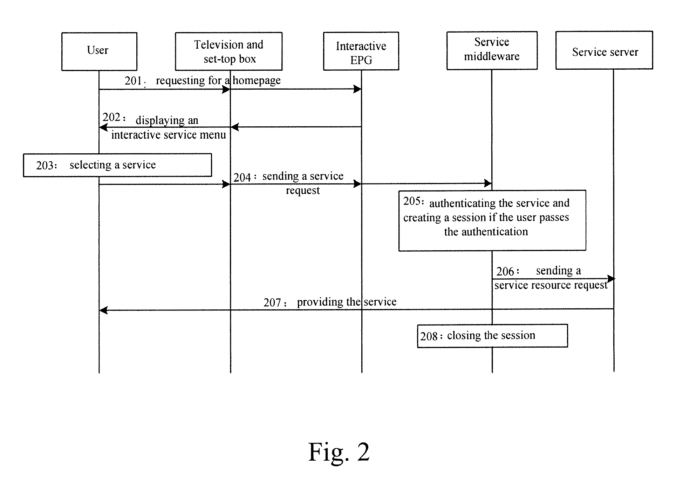

Figure 2 shows a simplified flow chart illustrating a method for implementing service management according to the structure shown in Figure 1.
Figure 3 shows a schematic diagram illustrating a system according to an embodiment of the present invention.
Figure 4 shows a simplified flow chart illustrating a method for implementing service management according to an embodiment of the present invention.
Figure 5 shows a schematic diagram illustrating the association of data at service management point 2 according to an embodiment of the present invention.
Figure 6 shows a simplified flow chart for implementing the management of service management strategy according to an embodiment of the present invention.
Figure 7 shows a schematic diagram illustrating an interactive EPG according to an embodiment of the present invention.
Figure 8 shows a schematic diagram illustrating a service middleware according to an embodiment of the present invention.

### Detailed Description of the Invention

In order to make the technical solutions and advantages of the present invention clearer, the present invention is hereinafter described in detail with reference to the drawings and embodiments.

The technical solution of the method for implementing service management provided by embodiments of the present invention includes: storing a service management strategy, inserting a process of executing the service management strategy into the procedure of a service; executing the service management strategy taking the features of a user as management conditions; and determining management measure for a service requested by the user based on the features of the user requesting for the service when the inserted process is performed.

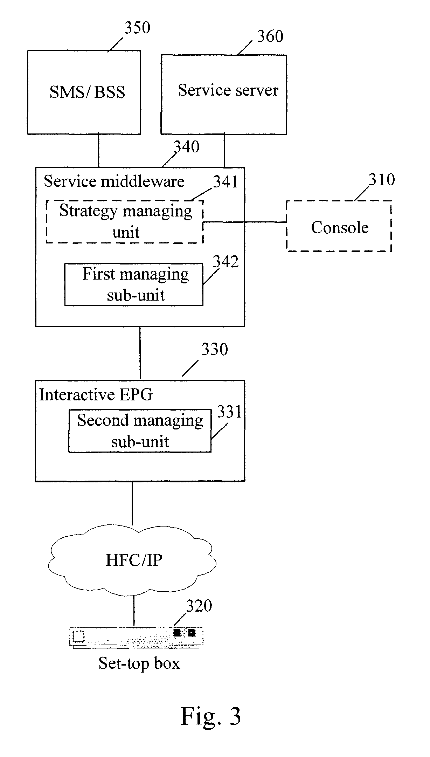

Figure 3 shows a schematic diagram illustrating a system according to an embodiment of the present invention. The system includes an SMS / BSS 350, a service middleware 340, an interactive EPG 330, a service server 360, and a set-top box 320. The set-top box 320 is a terminal device.

The set-top box 320 is configured to forward service requests sent from users with different features to the interactive EPG 330.

The interactive EPG 330 is configured to send the received service requests which are sent from users with different features and forwarded by the set-top box 320 to the service middleware 340, store a service management strategy, and insert a process of executing the service management strategy into the procedure of a service. When the process of executing the service management strategy is executed, the interactive EPG 330 performs the service management strategy taking the features of a user as manage conditions, and determines manage measure for the service requested by the user based on the features of the user requesting for the service.

The service middleware 340 is configured to send the received service requests sent from the interactive EPG 330 to the service server 360, store a service management strategy, and insert a process of executing the service management strategy into the procedure of a service. When the process of executing the service management strategy is executed, the service middleware 340 performs the service management strategy taking the features of a user as manage conditions, and determines manage measure for the service requested by the user based on the features of the user requesting for the service.

The service server 360 is configured to provide the service to the terminal device 320 via the service middleware 340 and the interactive EPG 330.

The service middleware includes at least one first managing sub-unit 342. The first managing sub-unit 342 is configured to store a service management strategy, and insert a process of executing the service management strategy into the procedure of a service. When the process of executing the service management strategy is executed, the service middleware 340 performs the service management strategy taking the features of a user as manage conditions, and determines manage measure for the service requested by the user based on the features of the user requesting for the service.

The interactive EPG 330 includes at least one second managing sub-unit 331. The second managing sub-unit 331 is configured to store a service management strategy, and insert a process of executing the service management strategy into the procedure of a service. When the process of executing the service management strategy is performed, the interactive EPG 330 performs the service management strategy taking the features of a user as manage conditions, and determines manage measure for the service requested by the user based on the features of the user requesting for the service. The system shown in Figure 3 differs from that shown in Figure 1 mainly in two aspects.

In one aspect, the first managing sub-unit 342 is newly added to the service middleware 340. Therefore, a service may be managed based on the features of the user requesting for the service and the manage strategy. The first managing sub-unit 342 may revise a session, add a service manage point in the procedure of an interaction, provide a service manage function at the service manage point, and manage a service with the service management strategy.

In another aspect, the second managing sub-unit 331 is newly added to the interactive EPG 330. The second managing sub-unit 331 may manage a service according to the features of the user by using the manage strategy at each service manage point.

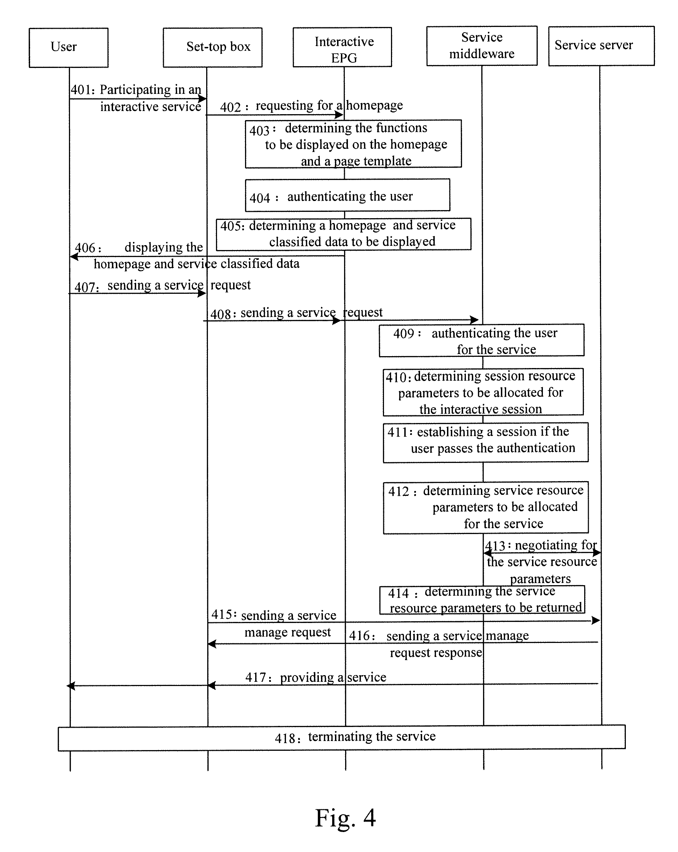

Figure 4 shows a flow chart for managing a service according to an embodiment of the present invention. The flow includes a service navigation process, a service request and serving process, and a service terminating process. The service navigation process and the service request and serving process adopt the technical solutions provided by embodiments of the present invention, while the service terminating process adopts a conventional technical solution. Therefore, the service terminating process will not be described in the following description. In the procedure of a service, service manage points are preset based on the preset service management strategy and different features of uses. When the procedure of the service is performed at the service manage point set in advance, the preset service management strategy is applied to determine manage measure for the service requested by the user based on the features of the user requesting for the service.

The features of a user adopted in embodiments of the present invention include four types of sub-features described as follows.

The first is user basic sub-feature including such features as address, region, education, income level, maturity level, service level and credit of the user.

The second is user service sub-feature including such features as activation situation of a service, and order information of a service product.

The third is user device sub-feature including such features as a manufacturer of a set-top box, the model of the set-top box, the number of the set-top box, the IP of the set-top box, the manufacturer of an intelligent card, the model of the intelligent card, and the number of the intelligent card.

The fourth is user network sub-feature including such features as the type of the network, and whether there is a home gateway.

The features of the user include the combination of at least one of the four types of the sub-features of the user. The features of the user may be saved in the service middleware, or be obtained by the service middleware from other parts of the system.

In this embodiment, two service manage points are preset in the service navigation procedure and three service manage points are preset in the service request and serving procedure. The method specifically includes the following processes.

Process 401: A user participates in an interactive service.

In this embodiment, it is indicated that the user participates in the interactive service when the user selects the designated channel that the interactive service occupies.

Process 402: A set-top box requests an interactive EPG for a homepage.

In this embodiment, a client of the set-top box requests the interactive EPG for the homepage.

Process 403: The interactive EPG determines the functions to be displayed on the homepage and a homepage template.

In this embodiment, Process 403 is an inserted process of executing a service management strategy based on the features of the user for determining the homepage template. The process is taken as service manage point 1 for managing the homepage template. And service management strategy 1 for managing the homepage template in the interactive EPG is applied at service manage point 1. Manage measure for the service requested by the user is determined based on the features of the user requesting for the service. The fields and format defined by the service management strategy are shown in Table 1.

**Table 1**

| Field | Type and Length | Description |
|---|---|---|
| Number of the strategy | CHAR[12] | Identifier of the strategy |
| Name of the strategy | CHAR[20] | Name of the strategy |
| Condition for the type of a service | CHAR[10] | Identifier of a service, such as online game |
| Identifier of a functional part | CHAR[3] | Identifier of the functional part where the service manage point locates, such as EPG - the part of the interactive EPG and BMW - the part of the service middleware |
| Service manage point | CHAR[10] | The service manage point in the procedure of the service |
| Manage conditions | CHAR[10 00] | The basis for the manage which is the combination of at least one sub-features of a user, such as the user whose model of a set-top box of is STB_GAME, whose network is an IP network, and whose family address is Wangfu International Garden |
| Type of the processing | CHAR[1] | 1 - terminating the service and releasing the session; 2 - revising the parameters of the service and limiting the service; 3 - filtering the data; 4 -maintaining the service; 5 - degrading the service; |
| Definition of the processing | CHAR[1000] | The manage measure for the service requested by the user if the manage conditions are satisfied |
| Valid period | CHAR[1] | 0 - valid always; 1 - day; 2 - week; 3 - year; 4 - a certain day in a certain year |
| Time for starting | CHAR[14] | The value is meaningless for the valid period of the strategy, "valid always"; the value is the time for starting the manage every day for the valid period of a strategy, "day"; the value is the day for starting the manage every week for the valid period of a strategy, "week"; the value is the day for starting the manage every year for the valid period of a strategy, "year"; the value is the day for starting the manage for the valid period of a strategy, "a certain day in a certain year" |
| Time for ending | CHAR[14] | The value is meaningless for the valid period of a strategy, "valid always"; the value is the time for ending the manage every day for the valid period of a strategy, "day"; the value is the day for ending the manage every week for the valid period of a strategy, "week"; the value is the day for ending the manage every year for the valid period of a strategy, "year"; the value is the day for ending the manage for the valid period of a strategy, , "a certain day in a certain year" |

The method for determining the manage measure for the service requested by the user based on the features of the user requesting for the service includes: determining whether the features of the user requesting for the service satisfy the manage conditions of the service management strategy, taking the corresponding manage measure in the service management strategy as the manage measure for the service requested by the user, and otherwise, not performing the manage measure.

For example, the manage conditions of service management strategy 1 consist of the combination of the sub-features of the user, i.e. the model of a device, the type of the network and the family address of the user. The user may be specifically defined as a user with such features as, the model of a set-top box being STB GAME, the network being an IP network, and the family address being the Wangfu International Garden. It is determined that whether at least one of user service sub-features in the manage conditions of a service management strategy in a homepage template matches the corresponding at least one of the user service sub-features of the user requesting for the service. If matched, the manage measure determined by the items of the type of the processing and the definition of the processing recorded in Table 1 is taken as the manage measure for the service requested by the user. The functions to be displayed on the homepage and the homepage template are determined.

Process 404: The interactive EPG authenticates the user.

The process of the authentication is included in this embodiment. Therefore, the user is authenticated in this embodiment.

Process 405: The interactive EPG determines service classified data to be displayed.

In this embodiment, Process 405 is performed if the user passes the authentication. Process 405 is an inserted process of executing a service management strategy for filtering the service classified data based on the features of the user. Process 405 is taken as service manage point 2 used for managing the filtration of the service classified data. Service manage point strategy 2 of the interactive EPG is applied at the service manage point 2 to filter the service classified data based on the combination of the sub-features of the user, and return the filtered service classified data.

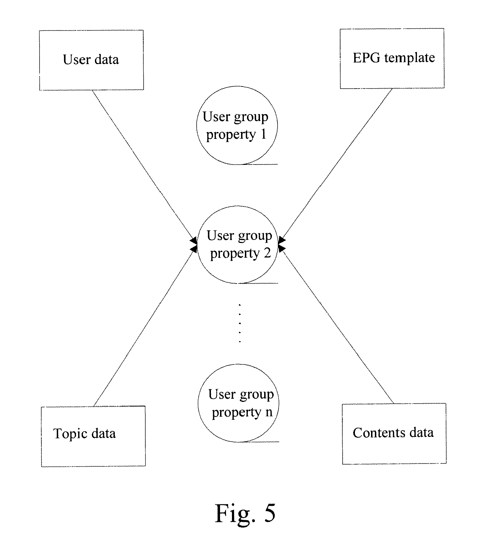

The displayed homepage and the service classified data include user data, an EPG template, topic data and contents data. The four types of data associate with each other and all include their respective fields of user group property. The user group property is determined by one or more sub-features of the user. The association of the four types of data is shown in Figure 5. For example, multiple EPG templates may be displayed to a user with such features as, the model of a set-top box being STB GAME, the network being an IP network, and the family address being Wangfu International Garden. Based on the corresponding relation between each type of the four data and the user group property, the interactive EPG determines the services and the service classified data to be displayed to the user. For example, the interactive EPG determines the topic data including English films to be displayed to the user with such features as, the model of the set-top box being STB GAME, the network being an IP network, and the education status being bachelor degree or above.

Process 406: The interactive EPG displays the homepage template and service classified data to the user via the set-top box.

Processes 401-406 describe the service navigation process, while the following Processes 407-417 describe the service request and service providing process in accordance with the embodiment of the present invention. The process specifically includes the following Process:

Process 407: The user sends a service request to the set-top box.

In this embodiment, the user selects a service from the service classified data and requests the set-top box for the service.

Process 408: The set-top box sends a service request to a service middleware via the interactive EPG

In this embodiment, the service request is sent to the interactive EPG after being encapsulated based on a protocol. The interactive EPG sends the service request to the service middleware after dealing with the request.

Process 409: The service middleware authenticates the user for the service.

In this embodiment, the service middleware authenticates the user for the service to guarantee that the user requesting for the service has the authority of accessing the service.

Process 410: The service middleware determines session resource parameters to be allocated for this interactive session.

In this embodiment, Process 410 is an inserted process of executing a service management strategy for determining the session resource parameters based on the features of the user. Process 410 is taken as service manage point 3 for determining the session resource parameters to be allocated. Service management strategy 3 used for determining the session resource parameters is applied at service manage point 3. The session resource parameters to be allocated for the interactive session are determined according to the sub-features of the user requesting for the service.

Process 411: The service middleware establishes the interactive session.

In this embodiment, the service middleware establishes the interactive session, and assigns system resources and network resources based on the session resource parameters to be allocated.

Process 412: The service middleware determines service resource parameters to be allocated for the service.

In this embodiment, Process 412 is an inserted process of executing a service management strategy for determining the service resource parameters to be allocated based on the features of the user. Process 412 is taken as service manage point 4 for determining the service resource parameters. Service management strategy 4 for determining the service resource parameters is applied at service manage point 4. The service middleware determines the service resource parameters to be allocated on the basis of the combination of the sub-features of the user requesting for the service.

Process 413: The service middleware negotiates with a service server for obtaining the service resource parameters.

In this embodiment, the service middleware requests the service server to allocate the service resource parameters. The service server dispatches the resources and prepares for playing based on the service resource parameters requested.

Process 414: The service server determines the service resource parameters to be returned.

In this embodiment, Process 414 is an inserted process of executing a service management strategy for filtering the service resource parameters based on the features of the user. Process 414 is taken as service manage point 5 used for filtering the service resource parameters. Service manage point strategy 5 used for filtering of the service resource parameters is applied at service manage point 5. The service middleware selects and filters the service resource parameters returned according to the combination of the sub-features of the user, and returns the filtered service resource parameters to the set-top box via the interactive EPG

Process 415: The set-top box sends a service manage request to the service server.

In this embodiment, a client of the set-top box sends the service manage request to the service server by using the service resource parameters to request for the service.

Process 416: The service server sends a service manage request response to the set-top box.

Process 417: The service server provides the service to the user via the set-top box.

In this embodiment, the service server provides the service, and the set-top box displays the service to the user.

Process 418: The procedure of the service is terminated.

To sum up, service manage points are set in the procedure of the service, and service management strategies are applied at the service manage points. The service management for the user is automatically implemented inside the system, which requires no more engineering measure and network layout. Therefore, the difficulty and risk in the implementation of engineering and the subsequent maintenance are reduced, and the complexity of the operation is also reduced.

In this embodiment, at the first service manage point, the otherness of service navigation information is dynamically managed based on the combination of the sub-features of a user, which supports the personalized demands of the user well, reduces the time used for browsing and query of the user, improves the experience of the user, improves the satisfaction of the user for the service, and advances the value of a brand provided by an operator. At the second service manage point, different topic data and contents are displayed based on the properties of users. The contents include a template, ordering a program, live broadcasting, carrousel and information browsing. Therefore, the diversity of operating a service may be implemented conveniently. At the third service manage point, it may be determined whether a user requesting for a service has the basic qualification for carrying out the service, based on the basic qualification for carrying out the service and the combination of the corresponding features of the user requesting for the service. Therefore, users covered by the service may be managed accurately, the benefit from a single user in the operation may be increased, the cost-benefit ratio may be reduced, and the cost of the operation may be reduced. At the fourth service manage point, the provision of a service and the distinction of the provided service are managed based on the combination of the features of a user. Therefore, it is possible to provide diversified service, which is convenient for the packaging and expanding of a service brand. At the fifth service manage point, service information may be filtered and screened according to the combination of the sub-features of a user, so that the group of users served by each service may be managed strictly, and the risk in supervising a service is reduced.

In addition, a method and a system for managing a service management strategy are provided in the embodiment. A strategy managing unit 341 and a console 310 are further included based on the structure of the system shown in Figure 3.

The console 310 is configured to send a manage strategy managing request to the strategy managing unit 341.

The strategy managing unit 341 is configured to send a service management strategy managing request to the first managing sub-unit 342 in the service middleware 340 and the second managing sub-unit 331 in the interactive EPG 330 based on the manage strategy managing request sent by the console 310. The strategy managing unit 341, which is a newly-added functional unit, is set in the service middleware 340. The strategy managing unit 341 may manage service management strategies saved in the first managing sub-unit 342 in the service middleware 340 and service management strategies saved in the second managing sub-unit 331 in the interactive EPG 330 based on the manage strategy managing request sent from the console 310. The management implemented by the strategy managing unit 341 includes adding, removing, revising and querying the service management strategies. The newly-added strategy managing unit 341 equips the service middleware 340 with the function of strategy configuration and strategy management and drives online loading of a service management strategy.

Correspondingly, the first managing sub-unit 342 in the service middleware 340 and the second managing sub-unit 331 in the interactive EPG 330 update the corresponding service management strategies based on the service management strategy managing request sent from the strategy managing unit 341.

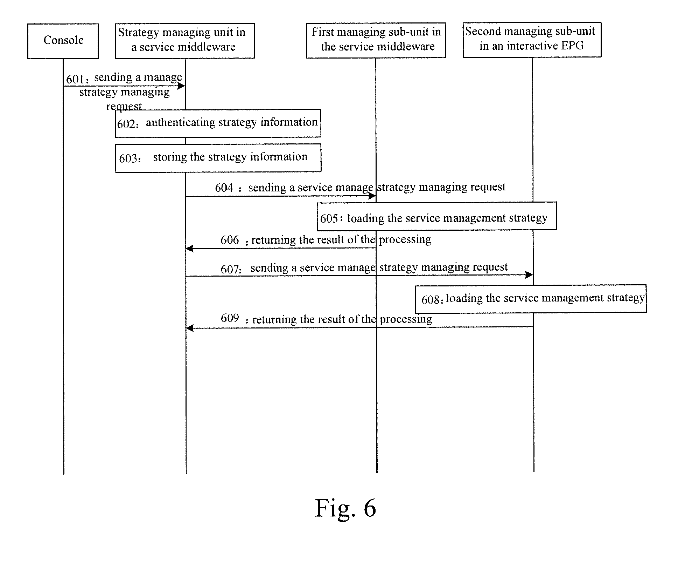

Figure 6 shows a flow chart of a method for managing a service management strategy according to an embodiment of the present invention. The method specifically includes the following process:

Process 601: A console sends a manage strategy managing request to a strategy managing unit in a service middleware.

In this embodiment, the manage strategy managing request sent by the console to the strategy managing unit in the service middleware includes an adding request, a removing request or a revising request.

Process 602: A strategy managing unit in the service middleware authenticates strategy information.

In this embodiment, the strategy managing unit in the service middleware resolves the manage strategy managing request to acquire the operation information and the strategy information of the request, and authenticates the strategy information.

Process 603: The strategy managing unit in the service middleware stores the strategy information.

In this embodiment, the strategy managing unit in the service middleware performs permanent storage for the strategy information which has been determined to be valid strategy information.

Process 604: The strategy managing unit in the service middleware sends a service management strategy managing request for loading the service management strategy to the first managing sub-unit.

In this embodiment, the strategy managing unit in the service middleware sends the service management strategy managing request for loading the service management strategy to the first managing sub-unit. When the service management strategy managing request requests to add or revise the service management strategy, the service management strategy added or revised is also required to be transmitted to the first managing sub-unit in the service middleware.

Process 605: The first managing sub-unit in the service middleware loads the service management strategy.

In this embodiment, the first managing sub-unit in the service middleware loads the corresponding service management strategy based on the service management strategy managing request.

Process 606: The first managing sub-unit in the service middleware returns the result of the processing to the strategy managing unit in the service middleware.

Process 607: The strategy managing unit in the service middleware sends a service management strategy managing request for loading a service management strategy to the second managing sub-unit in the interactive EPG

In this embodiment, when the service management strategy managing request is an adding or a revising request, the service management strategy is transmitted based on the measure for Process 604.

Process 608: The second managing sub-unit in the interactive EPG loads the service management strategy.

Process 609: The second managing sub-unit in the interactive EPG returns the result of the processing to the strategy managing unit in the service middleware.

In this embodiment, the manage strategy in a service may be configured based on a combination of the sub-features of a user and the demand of an operation. Therefore, the flexibility of the operation is enhanced, which facilitates the packaging and expanding of a service, enhances the energy of the service, improves the competitiveness of the service, and provides more choices for the user.

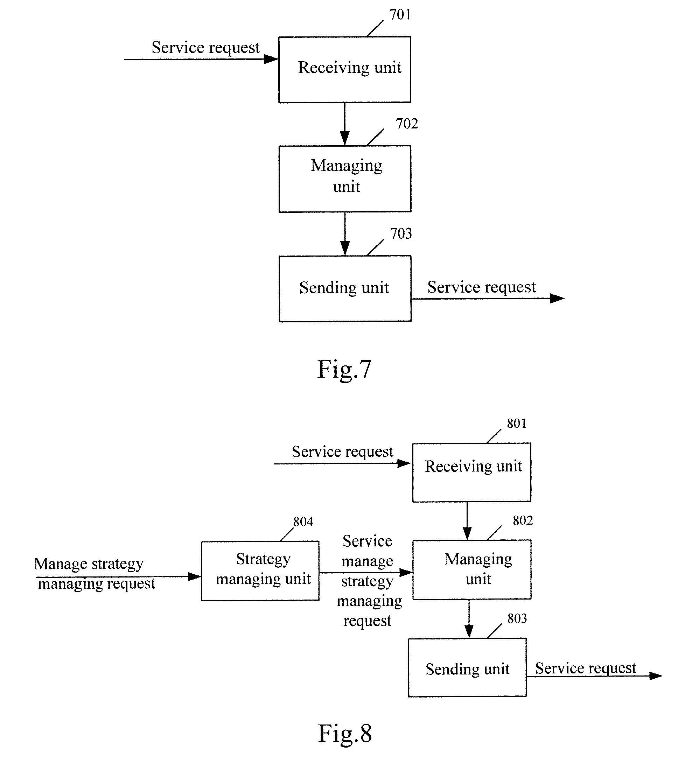

Figure 7 shows a schematic diagram illustrating the structure of an interactive EPG according to an embodiment of the present invention. The interactive EPG includes a receiving unit 701, a sending unit 703 and a managing unit 702.

The receiving unit 701 is configured to receive a service request carrying the features of a user sent from the user and send the service request to the managing unit 702.

The managing unit 702 is configured to store a service management strategy, insert a process of executing the service management strategy into the procedure of a service, execute the service management strategy taking the features of the user as manage conditions when the process of executing the service management strategy is executed, determine the manage measure for the service requested by the user based on the features of the user sending the service request to the receiving unit 701, and send the service request sent from the receiving unit 701 to the sending unit 703.

The sending unit 703 is configured to forward the service request sent from the managing unit 702 to the service middleware.

Figure 8 shows a schematic diagram illustrating the structure of a service middleware according to an embodiment of the present invention. The service middleware includes a receiving unit 801, a sending unit 803 and a managing unit 802.

The receiving unit 801 is configured to receive the service request carrying the features of the user sent from the interactive EPG and send the service request to the service managing unit 802.

The service managing unit 802 is configured to store a service management strategy, insert a process of executing the service management strategy into the procedure of a service, execute the service management strategy taking the features of the user as manage conditions when the process of executing the service management strategy is executed, determine the manage measure for the service requested by the user based on the features of the user requesting for the service, and send the service request sent from the receiving unit 801 to the sending unit 803.

The sending unit 803 is configured to forward the service request sent from the service managing unit 802 to a service server.

The service middleware may also include a strategy managing unit 804. The strategy managing unit 804 is configured to send a service management strategy managing request of a service to the managing unit in the service middleware and the managing unit in the interactive EPG based on a manage strategy managing request sent from a console.

The above are merely preferred embodiments of the present invention and are not for use in limiting the protection scope thereof. Any modification, equivalent substitution, and improvement without departing from the spirit and principle of the present invention should be covered in the protection scope of the present invention.

## Claims

1. A method for managing a service, suitable for the field of digital television, internet television, or mobile television, comprising:
receiving a request from a user;
obtaining a service management strategy taking the features of the user as manage conditions; and
determining manage measure for a service according to the features of the user and the service management strategy.

2. The method of Claim 1, wherein the features of the user comprise at least one of user basic sub-feature, user service sub-feature, user device sub-feature, and user network sub-feature.

3. The method of Claim 2, wherein the request from the user is a homepage request; and
obtaining a service management strategy taking the features of the user as manage conditions comprises:
obtaining the service management strategy for determining a homepage template taking the features of the user as the manage conditions.

4. The method of Claim 2, wherein the request from the user is a homepage request; and
obtaining a service management strategy taking the features of the user as manage conditions comprises:
obtaining the service management strategy for filtering service classified data taking the features of the user as the manage conditions as determining a homepage template.

5. The method of Claim 3, wherein
obtaining a service management strategy taking the features of the user as manage conditions further comprises:
obtaining the service management strategy for filtering service classified data taking the features of the user as the manage conditions as determining the homepage template.

6. The method of Claim 5, wherein
the service classified data comprises user data, an EPG template, topic data and contents data, and the four types of data associate with each other; and
determining the manage measure for a service according to the features of the user and the service management strategy comprises:
determining whether the features of the user accord with the manage conditions of the service management strategy; and
determining a homepage and service classified data to be displayed to the user by using the relation of the four types of data if the features of the user accord with the manage conditions of the service management strategy.

7. The method of Claim 6, wherein
the user data, EPG template, topic data and contents data associate with each other via a user group property which corresponds to the four types of data, the user group property is determined by at least one of the sub-features of the user; and
determining a homepage and service classified data to be displayed to the user by using the relation of the four types of data comprises:
determining the homepage and the service classified data to be displayed to the user according to the corresponding relation between each type of data and the user group property, and at least one of the sub-features of the user.

8. The method of Claim 2, wherein the request from the user is a session request; and
obtaining a service management strategy taking the features of the user as manage conditions comprises:
obtaining the service management strategy for determining session resource parameters taking the features of the user as the manage conditions.

9. The method of Claim 2, wherein the request from the user is a session request; and
obtaining a service management strategy taking the features of the user as manage conditions comprises:
obtaining the service management strategy for determining service resource parameters taking the features of the user as the manage conditions.

10. The method of Claim 2, wherein the request from the user is a session request; and
obtaining a service management strategy taking the features of the user as manage conditions comprises:
obtaining the service management strategy for filtering service resource parameters taking the features of the user as the manage conditions as determining the service resource parameters.

11. The method of any of Claims 2 to 5, and 8 to 10, wherein
determining the manage measure for a service according to the features of the user and the service management strategy comprises:
determining whether the features of the user accord with the manage conditions of the service management strategy; and
taking a manage measure corresponding to the manage conditions in the service management strategy as the manage measure for the service if the features of the user accord with the manage conditions of the service management strategy.

12. The method of Claim 11, wherein
determining whether the features of the user accord with the manage conditions of the service management strategy comprises:
determining whether at least one user service sub-feature in the manage conditions of the service management strategy matches at least one user service sub-feature of the user; and
determining that the features of the user accord with the manage conditions of the service management strategy if at least one user service sub-feature in the manage conditions of the service management strategy matches at least one user service sub-feature of the user.

13. The method of Claim 12, wherein the service management strategy comprises a service type condition, and
determining the manage measure for a service according to the features of the user comprises:
determining whether the service accords with the service type condition of the service management strategy; and
taking a corresponding manage measure in the service management strategy as the manage measure for the service if the service accords with the service type condition of the service management strategy.

14. The method of Claim 1, further comprising:
managing the service management strategy based on a manage strategy managing request.

15. The method of Claim 14, wherein
managing the service management strategy comprises:
resolving a managing request to obtain operation information and strategy information; and
loading a new service management strategy based on the operation information and strategy information.

16. An apparatus for managing a service, suitable for the field of digital television, internet television, comprising:
a receiving unit, configured to receive a request from a user; and
a managing unit, configured to obtain a service management strategy taking the features of the user as manage conditions, and determine manage measure for a service according to the features of the user and the service management strategy.

17. The apparatus of Claim 16, wherein
the apparatus is a service middleware, the managing unit is a first managing sub-unit;
the first managing sub-unit is configured to obtain the service management strategy for performing at least one of determining session resource parameters, determining service resource parameters and filtering the service resource parameters taking the features of the user as the manage conditions.

18. The apparatus of Claim 16 or 17, wherein
the apparatus is an interactive EPG, the managing unit is a second managing sub-unit;
the second managing sub-unit is configured to obtain the service management strategy for determining a homepage template or filtering service classified data taking the features of the user as the manage conditions.

19. The apparatus of Claim 17, wherein the service middleware comprises a strategy managing unit;
the strategy managing unit is configured to send a service management strategy managing request to the first managing sub-unit in the service middleware; and
the first managing sub-unit is further configured to resolve operation information and strategy information from the service management strategy managing request, and load a new service management strategy based on the operation information and the strategy information.

20. The apparatus of Claim 18, wherein the service middleware further comprises: a strategy managing unit;
the strategy managing unit is configured to send a service management strategy managing request to the second managing sub-unit in the interactive EPG; and
the second managing sub-unit is further configured to resolve operation information and strategy information from the service management strategy managing request, and load a new service management strategy based on the operation information and strategy information.

21. A system for managing a service, suitable for the field of digital television, internet television, comprising:
a user terminal, UE, configured to send a request; and
a network-side device, configured to receive the request sent from the UE and obtain a service management strategy taking the features of the user as manage conditions; and determine manage measure for a service according to the features of the user requesting the service and the service management strategy.

22. The system of Claim 21, wherein the network-side device comprises:
a service middleware, configured to obtain the service management strategy for performing at least one of determining session resource parameters, determining service resource parameters and filtering the service resource parameters taking the features of the user as the manage conditions.

23. The system of Claim 21, wherein the network-side device comprises:
an interactive EPG, configured to obtain the service management strategy for determining a homepage template or filtering service classified data taking the features of the user as the manage conditions, and determine the manage measure for the service according to the features of the user.

24. The system of Claim 21, wherein the network-side device comprises:
a service middleware, configured to obtain the service management strategy for performing at least one of determining session resource parameters, determining service resource parameters and filtering the service resource parameters taking the features of the user as the manage conditions;
an interactive EPG, configured to obtain the service management strategy for determining a homepage template or filtering service classified data taking the features of the user as the manage conditions.
